(19) Europäisches Patentamt / European Patent Office / Office européen des brevets

(11) **EP 3 301 424 B1**

(12) **EUROPEAN PATENT SPECIFICATION**

(45) Date of publication and mention
of the grant of the patent:
**07.10.2020 Bulletin 2020/41**

(51) Int Cl.:
**G01L 17/00** *(2006.01)* **G01L 1/20** *(2006.01)*

(21) Application number: **17188173.3**

(22) Date of filing: **28.08.2017**

(54) **LOAD DISTRIBUTION MEASURING DEVICE FOR VEHICLES**

LASTVERTEILUNGSMESSVORRICHTUNG FÜR FAHRZEUGE

DISPOSITIF DE MESURE DE DISTRIBUTION DE CHARGE POUR VÉHICULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2016 JP 2016191638**

(43) Date of publication of application:
**04.04.2018 Bulletin 2018/14**

(73) Proprietors:
• **Subaru Corporation**
**Tokyo 150-8554 (JP)**
• **A & D Company, Limited**
**Toshima-ku**
**Tokyo 170-0013 (JP)**

(72) Inventors:
• **KOGURE, Masaru**
**Tokyo, 150-8554 (JP)**
• **BANNO, Masaaki**
**Saitama, Japan 364-8585 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(56) References cited:
**JP-A- H06 255 326      US-A- 5 641 900**
**US-A1- 2006 123 897    US-A1- 2010 292 953**

**Description**

TECHNICAL FIELD

Embodiments of the invention as described herein relate generally to a load distribution measuring device for vehicles.

BACKGROUND

In a vehicle, such as an automobile, a grounding surface of a wheel or a tyre is an important factor which determines the basic performance of a vehicle.

Devices to measure a grounding surface of a single body of a tyre or a wheel exist as disclosed in Japanese Patent Application Publication JP 2006-226 778 A, Japanese Patent Application Publication JP 2009-085 621 A, and Japanese Patent Application Publication JP 2010-078 416 A. However, there are not many devices to measure the size and form of a grounding surface in a state where a vehicle is actually running.

In particular, a vehicle, such as an automobile, is a heavy object of several tons, and it is extremely difficult to measure a load distribution of a grounding surface at a high resolution when such a heavy object is actually running. Therefore, currently it is general to estimate a load distribution of a grounding surface by a numerical simulation.

In such a situation, in recent years people have started developing a load cell sensor having a high load resistance performance. It can be considered that a load distribution by grounding for vehicles can be measured by arraying the load cell sensors in a matrix form on a road surface on which a vehicle runs. Specifically, the size and form of a grounding surface in a state where a vehicle is actually running can be measured by arraying load cell sensors in a matrix form on a road surface on which a vehicle runs, and taking detection values of the load cell sensors at the time of a vehicle passing over the load cell sensors.

Furthermore, it is also possible to measure a load distribution of a grounding surface.

However, even when such load cell sensors are arrayed in a matrix form, a resolution of load distribution of a grounding surface is low. Since a plurality of load cell sensors are to be arrayed at intervals each not less than a size of each load cell sensor, resolution influenced by an array of the load cell sensors is limited by the size and array density of the load cell sensors. It is difficult to conclude that resolution is sufficient to analyze a running condition for vehicles with high precision.

It can also be considered to increase an array density to improve resolution by miniaturizing load cell sensors. However, when the load cell sensor is miniaturized smaller than the present size, a problem may be caused in durability in light of a load peak or the like during running of a vehicle. Load cell sensors have to be able to bear cases, such as when a vehicle repeatedly passes at a speed not less than 100 kilometers per hour, with applying not less than a load of 1000 kg.

As described above, it is required to provide a device which can measure an input load distribution from a tyre, input into a sensor at the time of a running vehicle passing over the sensor, at high resolution.

US Patent Application Publication US 2010/292953 aims at disclosing the determination of the pressure and the profile depth of a pneumatic vehicle tire using an array of load sensors over which the vehicle travels. The load sensors of at least one row may be offset in relation to one or more rows of load sensors. The velocity of the vehicle may be calculated from the time difference of the signals from two rows.

US Patent 5 641 900 A aims at disclosing a detection of a distribution of a specific pressure in the ground-contacting area of a tire by means of a plurality of sensing cells distributed on a plate-like support applied to a rest surface acted upon by the tire through its rolling surface.

US Patent Application Publication US 2006/0123897 A1 aims at disclosing a method for measuring at least one characteristic property of a pneumatic tyre for a vehicle wheel includes arranging at least one array of deformable sensors along a first direction; making the tyre pass at speed over the sensors along a second direction; generating an electrical signal proportional to a speed of deformation of each sensor when the tyre contacts the sensor; detecting the electrical signal generated by each sensor; and determining, starting with the detected signals, the at least one characteristic properly.

SUMMARY OF THE INVENTION

The present invention provides a load distribution measuring device in accordance with independent claim 1. Preferred embodiments of the load distribution measuring device according to the invention are set forth in the dependent claims.

In general, according to one embodiment of the present application, a load distribution measuring device for vehicles includes: load cell sensors that detect an input from a vehicle passing; an operation part that is adapted to generate an actual load distribution from a tyre of a vehicle; and an output part that outputs the actual load distribution generated by the operation part. The load cell sensors are disposed side by side on a road surface on which a vehicle runs.

The actual load distribution is input into the load cell sensors when a vehicle passed over the load cell sensors. The actual load distribution is generated based on detection values from the load cell sensors. The load cell sensors include at least one load cell sensor disposed with a positional displacement in a direction perpendicular to a passing direction of a vehicle. The at least one load cell sensor is disposed between two load cell sensors aligning along the direction perpendicular to the passing direction of a vehicle.

The operation part is adapted to generate the actual load distribution based on the detection values from the load cell sensors including the at least one load cell sensor disposed with the positional displacement. A resolution of the actual load distribution in the direction perpendicular to the passing direction of a vehicle has been enhanced higher than a resolution corresponding to an interval of the two load cell sensors.

Preferably, the load cell sensors are disposed in sensor rows in units of a sensor row. Each of the sensor rows has load cell sensors disposed along a direction perpendicular to a reference passing direction of a vehicle. The sensor rows are disposed with a positional displacement to each other by a range shorter than a center interval of the load cell sensors in the direction perpendicular to the reference passing direction. The operation part is adapted to generate the actual load distribution based on detection values from the sensor rows. A resolution of the actual load distribution in the direction perpendicular to the reference passing direction has been enhanced by a row number of the sensor rows.

Preferably, the load cell sensors are disposed in a matrix form arrangement so that load cell sensors are disposed in a row direction and load cell sensors are disposed in a column direction. The column direction of the matrix form arrangement is oblique against a reference passing direction of a vehicle to intersect with the reference passing direction. The operation part is adapted to generate the actual load distribution based on detection values from the load cell sensors in rows.

A resolution of the actual load distribution in a direction perpendicular to the reference passing direction has been enhanced by a row number of the matrix form arrangement. The actual load distribution is expressed by the reference passing direction and the direction perpendicular to the reference passing direction.

Preferably, an angle $\theta$, at which the column direction of the matrix form arrangement intersects with the reference passing direction of a vehicle, satisfies Expression (1) when N is the row number of the matrix form arrangement.

$$\theta = \arctan(1/N) \qquad \text{...Expression (1)}$$

wherein arctan() is an arctangent function.

Preferably, the operation part is adapted to carry out the following steps and functions: calculate a passing velocity of a vehicle based on a time difference between singular points in detection waveforms of the load cell sensors disposed with a positional displacement in a reference passing direction of a vehicle; select detection values in a same input state as an input state in a case where a vehicle passes a predetermined operation reference line; and generate a load distribution on the operation reference line, based on combination of the selected detection values from the load cell sensors.

The detection values are selected from the detection waveforms from the load cell sensors, respectively, based on a time difference calculated based on the passing velocity and a distance between the predetermined operation reference line and each of the load cell sensors in the reference passing direction.

Preferably, the operation part is adapted to generate a load distribution by repeating generation processing of the load distribution on the operation reference line with displacing a position of the operation reference line in the reference passing direction within a predetermined range larger than a grounding surface of a vehicle. A resolution in the reference passing direction of the generated load distribution corresponds to an operation number of operation reference lines.

Preferably, the operation part is adapted to switch the operation reference line depending on a direction in which a vehicle passes a range in which the load cell sensors have been placed.

Preferably, the operation part is adapted to switch the operation reference line between when a vehicle passes the range in a first passing direction and when a vehicle passes the range in a second passing direction opposite to the first passing direction.

Preferably, the operation part is adapted to cancel generation processing of the load distribution and the output part outputs an error when a vehicle has passed in a direction largely deviated from the reference passing direction of a vehicle.

Preferably, the operation part is adapted to perform an interpolation of the detection values from the load cell sensors, the detection waveforms from the load cell sensors or the load distribution so that the detection values, the detection waveforms or the load distribution correspond to a block pattern of the tyre of a vehicle.

Preferably, the operation part is adapted not to perform the interpolation when one load cell sensor out of the load cell sensors has detected a small detection value in a state where a sufficient input does not act and when another load cell sensor out of the load cell sensors has not output a detection value by another sufficient input while the operation part is adapted to perform the interpolation using the detection value by the other load cell sensor when the one load cell sensor has detected the small detection value and when the other load cell sensor has output the detection value by the sufficient input. The other load cell sensor is aligned with the one load cell sensor in the reference passing direction or in a direction along the reference passing direction.

BRIEF DESCRIPTION OF THE DRAWINGS

In the accompanying drawings:

| | |
|---|---|
| FIG. 1 | shows a configuration of a load distribution measuring device for vehicles according to the first embodiment of the present invention; |
| FIGS. 2A and 2B | illustrate an example of the load cell sensor of FIG. 1; |
| FIGS. 3A and 3B | illustrate an array and a detection resolution of the load cell sensors; |
| FIGS. 4A to 4E | illustrate correspondence relationship between a passage period of a vehicle and a sampling period; |
| FIGS. 5A to 5D | illustrate processing to select detection values from detection waveforms of the sensor rows of the load cell array based on an operation reference line; |
| FIGS. 6A and 6B | illustrate an example of load distributions by actual grounding of the tyre of a passed vehicle; |
| FIG. 7 | shows a configuration of the load distribution measuring device for vehicles according to the second embodiment of the present invention; |
| FIGS. 8A and 8B | illustrate correspondence relationship between the load cell array and a passing direction of a vehicle; |
| FIG. 9 | is a flow chart of passing direction determination processing of the load distribution measuring device for vehicles according to the third embodiment of the present invention; |
| FIG. 10 | illustrates correspondence relationship between the matrix-like load cell array and a passing direction of a vehicle; |
| FIG. 11 | is a flow chart of passing direction determination processing of the load distribution measuring device for vehicles according to |
| FIGS. 12A to 12C | illustrate correspondence relationship between a block pattern of the tyre of a vehicle and interpolation processing; and |
| FIG. 13 | is a flow chart of interpolation processing of the load distribution measuring device for vehicles according to the fifth embodiment of the present invention. |

DETAILED DESCRIPTION

Hereinafter, embodiments of the present invention will be described in detail with reference to the accompanying on the drawings.

First Embodiment

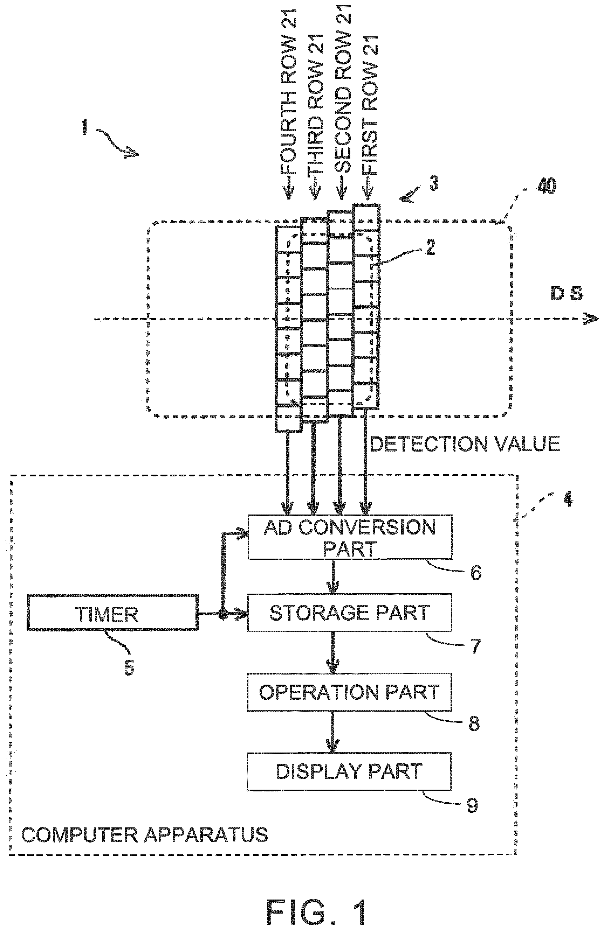

FIG. 1 shows a configuration of a load distribution measuring device 1 for vehicles according to the first embodiment of the present invention.

The load distribution measuring device 1 of FIG. 1 has a load cell array 3, composed of load cell sensors 2, and a computer apparatus 4 to which the load cell sensors 2 are coupled.

The computer apparatus 4 has a memory which is not shown, an operation processing device, a timer 5, a monitor and the like. The operation processing device reads and executes program stored in the memory. Thereby, the computer apparatus 4 achieves the timer 5, an A/D (Analog to Digital) conversion part 6, a storage part 7, an operation part 8, and a display part 9, as shown in FIG. 1.

The timer 5 measures time.

The load cell sensors 2 are coupled to the A/D conversion part 6. The A/D conversion part 6 samples detection values of the load cell sensors 2 based on the timer 5, and makes the storage part 7 store the sampled detection values.

The storage part 7 stores the detection values sampled by the A/D conversion part 6 with making the detection values correspond to sampling times input from the timer 5.

The operation part 8 obtains the sampling data stored in the storage part 7, and generates a load distribution. The operation part 8 generates a load distribution of a vehicle which has passed over the load cell array 3 composed of the load cell sensors 2.

The display part 9 displays the load distribution, generated by the operation part 8, on the display part 9.

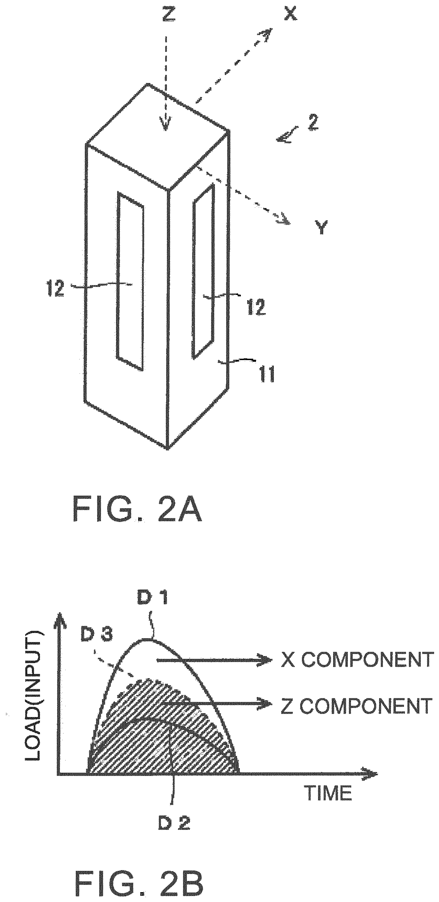

FIGS. 2A and 2B illustrate an example of the load cell sensor 2 of FIG. 1.

FIG. 2A is an appearance perspective view of the load cell sensor 2. The load cell sensor 2 of FIG. 2A has a bar-shaped member 11 having strength, which can bear a dynamic load of a running vehicle, and strain sensors 12 stuck on the four sides of the bar-shaped member 11.

When a load in the Z-axis direction along the axial direction of the bar-shaped member 11 is input into the load cell sensor 2, the bar-shaped member 11 is compressed in the axial direction. In this case, each of the strain sensors 12 stuck on the four sides of the bar-shaped member 11 detects a corresponding strain.

When a load in the X-axis direction is input, the bar-shaped member 11 curves in the X-axis direction. In this case, the strain sensors 12 stuck on a pair of the sides of the bar-shaped member 11 in the X-axis direction detect strains.

When a load in the Y-axis direction is input, the bar-shaped member 11 curves in the Y-axis direction. In this case, the strain sensors 12 stuck on a pair of the sides of the bar-shaped member 11 in the Y-axis direction detect strains.

FIG. 2B shows an example of a pair of detection waveforms in the X-axis direction of the load cell sensor 2. In FIG. 2B, the horizontal axis is time, and the vertical axis is the amplitude of a load (input). The solid lines in FIG. 2B show the detection waveform D1 of the strain sensor 12 stuck on one side of the bar-shaped member 11 in the X-axis direction, and the detection waveform D2 of the strain sensor 12 stuck on the other side of the bar-shaped member 11 in the X-axis direction respectively.

Each of a pair of the detection waveforms D1, D2 in FIG. 2B includes a load in the Z-axis direction along with a load in the X-axis direction.

In this case, the waveform D3 of the dotted line, consisting of average values of the two detection waveforms D1, D2 in FIG. 2B, is a component by a load in the Z-axis direction. Apart between the detection waveform D1 of the large solid line and the waveform D3 of the dotted line is a component by a load in the X-axis direction.

A load in the Y-axis direction, which is not particularly shown, is similar to the load in the X-axis direction shown in FIG. 2B.

By operation processing based on the above, a load in the Z-axis direction, a load in the X-axis direction, and a load in the Y-axis direction, which have acted on the load cell sensor 2, can be obtained.

As shown in FIG. 1, the load cell sensors 2 are arranged on a road surface S on which a vehicle runs, and compose the load cell array 3 in the load distribution measuring device 1. Thereby, the load cell sensors 2 can detect a load input of a vehicle which has run the road surface S and passed the load cell array 3. Detection values of the load cell sensors 2 allow detecting a load distribution of a grounding surface of a tyre 40 of a vehicle. It is possible to measure the size and form of a grounding surface, and a load distribution within the grounding surface in a state where a vehicle is actually running.

Note that, even when the load cell sensors 2 are arranged on the road surface S as described above, a resolution of load distribution of a grounding surface is low. The load cell sensors 2 have to be arrayed at intervals not less than the physical size. As a result, the resolution is limited by the size of the load cell sensor 2 and an array density of the load cell sensors 2. It is not easy to obtain a sufficient resolution to analyze a running condition of a vehicle with high precision.

Furthermore, it can also be considered to increase an array density to increase the resolution by miniaturizing the load cell sensor 2. However, a vehicle may run at a speed not less than 10 kilometers per hour, for example. A peak of a load which acts on the road surface S by such run is very large. As a result, when durability and reliability of a device are taken into consideration, it is not easy to miniaturize the load cell sensor 2 smaller than the present size.

It is because if the load cell sensors 2 are miniaturized, the bar-shaped member 11 becomes thin, and strength and rigidity thereof deteriorate.

As described above, in a device which measures a load distribution of an actually running vehicle, it is required to improve a resolution of load distribution to be measured without making a physical specification, required for the load cell sensors 2, strict as much as possible.

Thus, firstly in this embodiment, an array of the load cell sensors 2 in the load cell array 3 is devised. Specifically, the load cell sensors 2 are arrayed to have an offset.

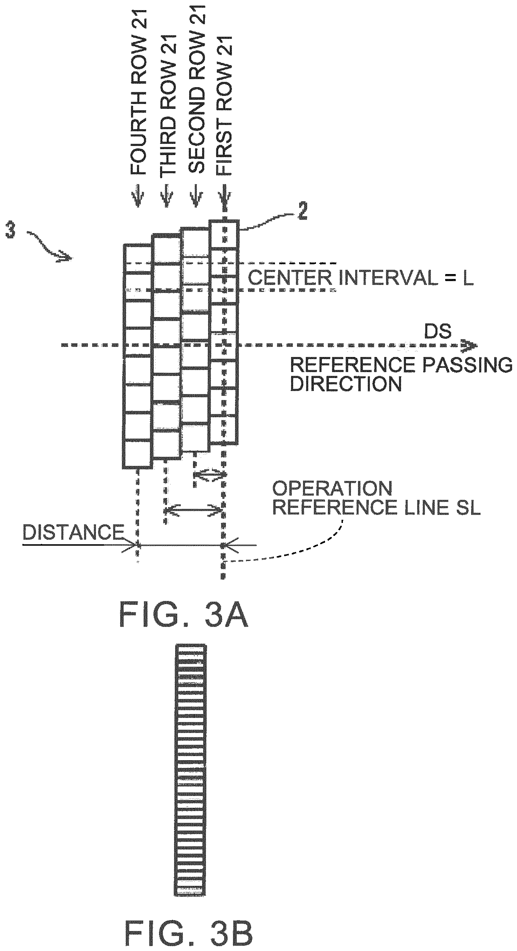

FIGS. 3A and 3B illustrate an array and a detection resolution of the load cell sensors 2. FIG. 3A illustrates an array of the load cell sensors 2. FIG. 3B illustrates a detection resolution in this embodiment.

As shown in FIG. 3A, the load cell sensors 2 are composed of plural sensor rows 21. Each of the sensor rows 21 has a plurality of the load cell sensors 2, which have been disposed adjacent at equal intervals along the direction perpendicular to the reference passing direction DS of a vehicle, and is used as a unit.

Since the number of the sensor rows 21 is four, the sensor rows 21 are disposed with being displaced every 1/4 of the center interval of the load cell sensors 2 in the direction perpendicular to the reference passing direction DS.

Thereby, the load cell sensors 2 disposed in the column direction along the reference passing direction DS are arrayed with being displaced by an equal amount of offset in the direction perpendicular to the reference passing direction DS.

For example, each of the load cell sensors 2 in the second sensor row 21 is disposed with being displaced between the two load cell sensors 2, adjacent in the direction perpendicular to the reference passing direction DS, in the first sensor row 21. Each of the load cell sensors 2 in the third sensor row 21 is also in the similar positional relationship against the load cell sensors 2 in the second sensor row 21. Each of the load cell sensors 2 in the fourth sensor row 21 is also in the similar positional relationship against the load cell sensors 2 in the third sensor row 21.

Next, generation processing of load distribution by the computer apparatus 4 will be described.

The A/D conversion part 6, coupled to the load cell sensors 2, samples detection values of the load cell sensors 2 at sampling timings designated by the timer 5, and stores the sampled detection values in the storage part 7. The storage part 7 relates the detection values of the load cell sensors 2 to sampling times of the sampling timings designated by the timer 5, and stores the detection values. By repeating this processing, detection values in a sampling period are accumulated and stored in the storage part 7.

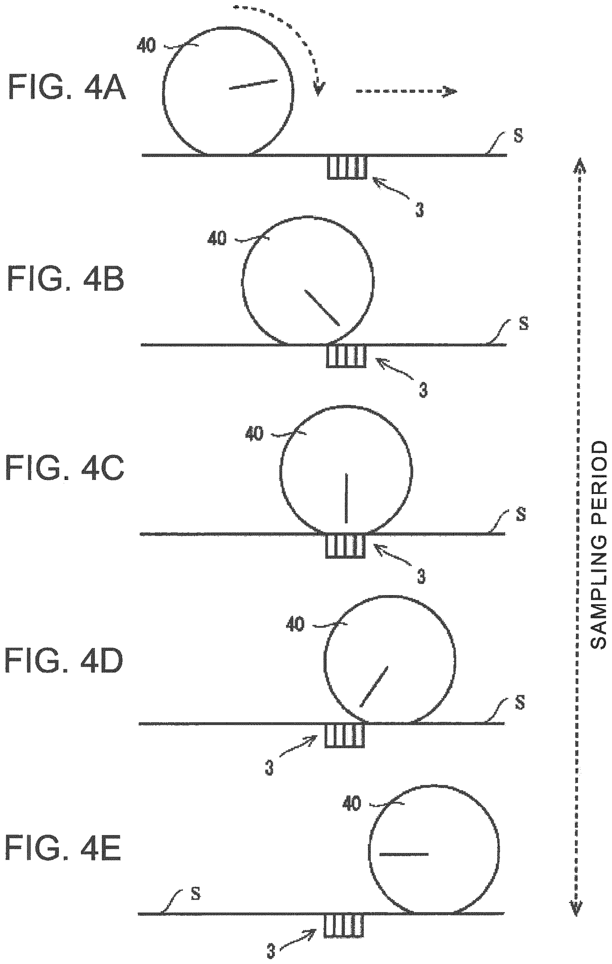

FIGS. 4A to 4E illustrate correspondence relationship between a passage period of a vehicle and a sampling period.

FIG. 4A shows a state before the tyre 40 of a vehicle passes the load cell array 3. FIG. 4B shows a state where the tyre 40 of a vehicle has reached the front end of the load cell array 3. FIG. 4C shows a state where the tyre 40 of a vehicle is located right above the load cell array 3. FIG. 4D shows a state where the tyre 40 of a vehicle moves away from the back end of the load cell array 3. FIG. 4E shows a state after the tyre 40 of a vehicle has passed the load cell array 3.

As shown in FIGS. 4A-4E, the tyre 40 of a vehicle, which runs the road surface S, passes over the load cell array 3. In this embodiment, the A/D conversion part 6 repeats sampling processing in a period from FIG. 4A to FIG. 4E.

Thereby, the storage part 7 accumulates detection values from the load cell sensors 2 of the load cell array 3 during the sampling period with relating the detection values to sampling times.

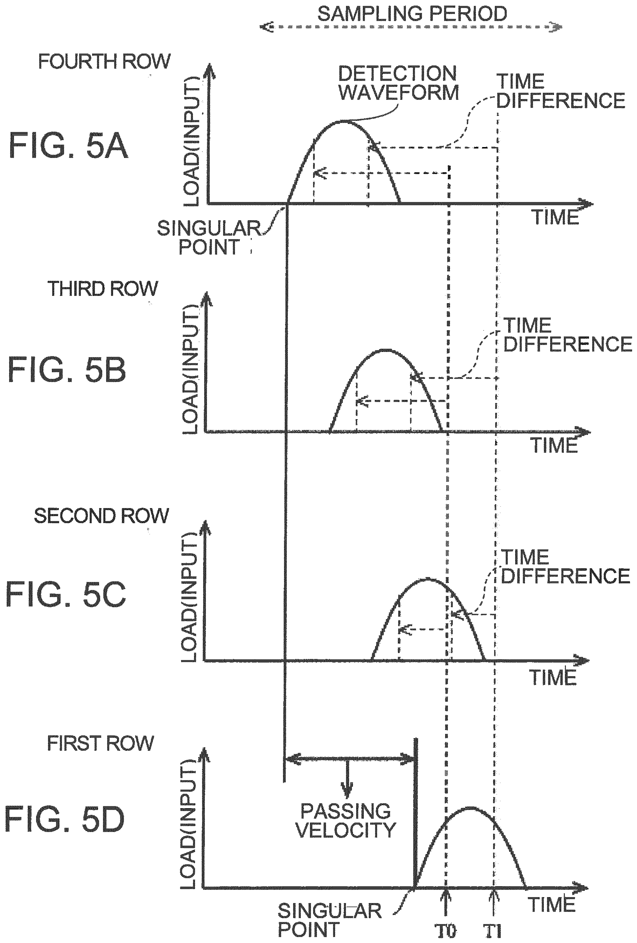

FIGS. 5A to 5D illustrate processing to select detection values from detection waveforms of the sensor rows 21 of the load cell array 3 based on an operation reference line SL.

FIGS. 5A to 5D shows detection waveforms from the load cell sensors 2 in a certain column. The horizontal axis is time. The vertical axis is the amplitude of a load (input). The load cell sensor 2 shown in FIGS. 2A, 2B can detect a load (input) in the Z-axis direction, a load (input) in the X-axis direction, and a load (input) in the Y-axis direction.

FIG. 5A shows a detection waveform from the load cell sensor 2 in the fourth sensor row 21 in the side which a vehicle enters. FIG. 5B shows a detection waveform from the load cell sensor 2 in the third sensor row 21 which is the second row from the side which a vehicle enters. FIG. 5C shows a detection waveform from the load cell sensor 2 in the second sensor row 21 which is the third row from the side which a vehicle enters. FIG. 5D shows a detection waveform from the load cell sensor 2 in the first sensor row 21 in the side which a vehicle leaves. Here, a detection waveform means an envelope of detection values measured at sampling times.

For example, each detection waveform becomes a significant detection value greater than 0 from timing when the tyre 40 of a vehicle starts to ride on the load cell sensor 2, the maximum detection value in a state where the tyre 40 rides right above the load cell sensor 2, and a detection value of the value 0 at timing when the tyre 40 deviates from the load cell sensor 2.

Then, as shown in FIGS. 5A-5D, detection timings of the significant detection waveforms are out of alignment on the time axis among the load cell sensors 2 in line. This is because the sensor rows 21 are arranged along the reference passing direction DS of a vehicle, as shown in FIG. 3A.

The operation part 8 generates a load distribution by grounding of the tyre 40 of a vehicle, which has actually passed over the load cell array 3 consisting of the load cell sensors 2, using such detection values in the plurality of rows. The operation part 8 generates a load distribution, in which a resolution in the direction perpendicular to the reference passing direction DS has been enhanced higher than an interval of two load cell sensors 2, using the detection values in the sensor rows 21.

In the generation processing of the load distribution by grounding, the operation part 8 firstly calculates a passing velocity V of a vehicle. The passing velocity V of a vehicle may be measured by another device using a laser, for example.

The operation part 8 calculates a time difference between the singular point P of the detection waveform from the fourth sensor row 21 shown in FIG. 5A and the singular point P of the detection waveform from the first sensor row 21 shown in FIG. 5D, for example. In FIGS. 5A-5D, a time difference in detection timing, at which each detection waveform rises up, is calculated.

Otherwise, the operation part 8 may calculate a time difference in detection timing of maximum values of detection waveforms or a time difference in detection timing at which detection waveforms disappear. Then, the passing velocity V of a vehicle is calculated based on this time difference and a distance from the fourth sensor row 21 to the first sensor row 21.

Next, the operation part 8 calculates a traveling time (time difference) from the previously set predetermined operation reference line SL to each load cell sensor 2 in the reference passing direction DS.

The operation reference line SL, which is used in the operation, may be located at a desired position in the reference passing direction DS. In FIG. 3A, a position of the first sensor row 21 is set as the operation reference line SL.

In this case, the operation part 8 calculates a traveling time (time difference in FIG. 5A) from the fourth sensor row 21 to the first sensor row 21 based on the passing velocity V and a known distance between the fourth sensor row 21 and the first sensor row 21.

Furthermore, the operation part 8 calculates a traveling time (time difference in FIG. 5B) from the third sensor row 21 to the first sensor row 21 based on the passing velocity V and a known distance between the third sensor row 21 and the first sensor row 21.

Furthermore, the operation part 8 calculates a traveling time (time difference in FIG. 5C) from the second sensor row 21 to the first sensor row 21 based on the passing velocity V and a known distance between the second sensor row 21 and the first sensor row 21.

Note that, a traveling time (time difference) at the first sensor row 21 is 0.

Next, the operation part 8 selects a detection value, in the input state same as that in the case where a vehicle passes the operation reference line SL, from a detection waveform by each load cell sensor 2.

For example, when the timing T0 in FIG. 5D is the above-mentioned input state, the operation part 8 selects a detection value at the timing T0 as a detection value by each load cell sensor 2 in the first sensor row 21.

As a detection value by each load cell sensor 2 in the second sensor row 21, a detection value at timing prior to the timing T0, used as the basis, by a traveling time (time difference in FIG. 5C) from the second sensor row 21 to the first sensor row 21 is selected as shown in the detection waveform corresponding to the second sensor row 21 in FIG. 5C.

As a detection value by each load cell sensor 2 in the third sensor row 21, a detection value at timing prior to the timing T0, used as the basis, by a traveling time (time difference in FIG. 5B) from the third sensor row 21 to the first sensor row 21 is selected as shown in the detection waveform corresponding to the third sensor row 21 in FIG. 5B.

As a detection value by each load cell sensor 2 in the fourth sensor row 21, a detection value at timing prior to the timing T0, used as the basis, by a traveling time (time difference in FIG. 5A) from the fourth sensor row 21 to the first sensor row 21 is selected as shown in the detection waveform corresponding to the fourth sensor row 21 in FIG. 5A.

Thereby, the detection values by all load cell sensors 2 in the first sensor row 21 to the fourth sensor row 21 are selected as detection values when a vehicle passes the operation reference line SL. Specifically, when the load cell sensors 2 are arrayed as shown in FIG. 3A, detection values by sensors whose arrangement density is four times higher than an original arrangement density can be obtained as shown in FIG. 3B.

A load distribution on the operation reference line SL can be generated. Note that, when an absolute value of a load is necessary, the operation part 8 may divide a selected detection value of each load cell sensor 2 by the row number of the sensor rows 21.

For example, when the sensor row 21 consisting of 20 load cell sensors 2 from the first column to the twentieth column is arranged in each of five rows from the A-th row to the E-th row with an offset to each other in order as shown in FIG. 3A, a data column consisting of detection values for one high-resolution row, generated by the above-mentioned processing, may be as the following array, for example. Note that, F[x, y] means a detection value at the X-th row and the Y-th column, and t0 to t4 are sampling timings of each sensor column.

Data column consisting of detection values for one high-resolution row

F[A, 1][t0], F[B, 1][t1], F[C, 1][t2], F[D, 1][t3], F[E, 1][t4], F[A, 2][t0], F[B, 2][t1], F[C, 2][t2], F[D, 2][t3], F[E, 2][t4],..., F[A, 19][t0], F[B, 19][t1], F[C, 19][t2], F[D, 19][t3], F[E, 19][t4], F[A, 20][t0], F[B,20][t1], F[C, 20][t2], F[D, 20][t3], F[E, 20][t4]

Furthermore, when t0 is set to 0 as shown in FIG. 5D, each sampling timing can be calculated as follows. Here, L is an array interval of the load cell sensors 2 and V is a passing velocity of a vehicle.

$$t1 = t0\text{-}L \div V \qquad \text{...Expression (1)}$$

$$t1 = t0\text{-}2 \times L \div V \qquad \text{...Expression (2)}$$

$$t1 = t0\text{-}3 \times L \div V \qquad \text{...Expression (3)}$$

$$t1 = t0\text{-}4 \times L \div V \qquad \text{...Expression (4)}$$

$$t1 = t0\text{-}5 \times L \div V \qquad \text{...Expression (5)}$$

Then, the operation part 8 repeats this generation processing of the load distribution on the operation reference line SL, with displacing a position of the operation reference line SL in the reference passing direction DS. A load distribution for a grounding surface of the tyre 40 of a vehicle can be generated by repeating the generation processing within a predetermined range larger than the grounding surface of the tyre 40 of a vehicle.

In this case, a resolution in the reference passing direction DS is to correspond to the operation number of the operation reference lines SL. The resolution is one derived by multiplying the passing velocity V of a vehicle by a sampling period of detection values.

For example, as for FIGS. 5A to 5D, a distribution of which resolution is a distance corresponding to the timing T0 to the timing T1 can be obtained by generating the load distributions on the operation reference line SL at the timing T0 and the timing T1. Furthermore, a load distribution on a grounding surface of the tyre 40 of a vehicle can be generated by repeating the operation for the whole detection waveform shown in FIG. 5D.

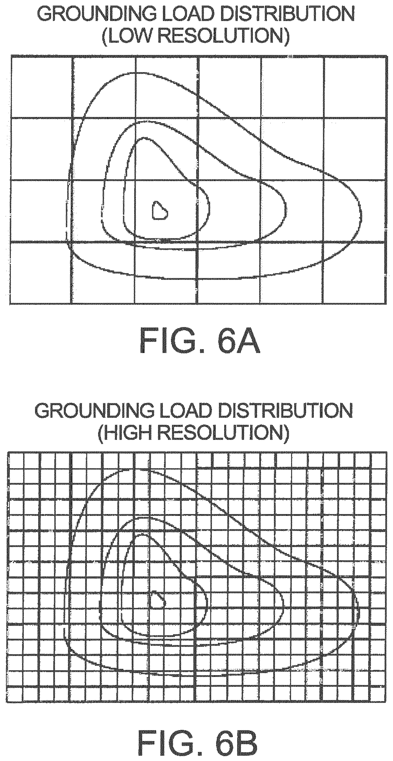

FIGS. 6A and 6B illustrate an example of load distributions by actual grounding of the tyre 40 of a passed vehicle.

FIG. 6A shows a comparative example of load distribution in the case of collectively reading detection values by the load cell sensors 2 arrayed in a matrix form having four rows and six columns. In this case, a load peak 31 shown in the cell at the fourth row and the third column is undetectable.

FIG. 6B shows a load distribution when four rows of the load cell sensors 2 are arrayed with being mutually displaced like this embodiment. In this case, a resolution four times higher than that of FIG. 6A is obtained in each of the row direction and the column direction. Then, a cell corresponding to the load peak 31 exists, and this load peak 31 can be indicated in the distribution.

As described above, in this embodiment, the load cell sensors 2, disposed side by side on the road surface S on which a vehicle runs, are arrayed with being displaced by an amount of offset divided by the row number of the sensor rows 21 for every sensor row 21. Therefore, the load cell sensors 2 in one sensor row 21 are disposed with being displaced, in the direction perpendicular to a passing direction of a vehicle, between two load cell sensors 2, aligning along the direction perpendicular to the passing direction of a vehicle, of another sensor row 21.

Then, the operation part 8 generates an actual load distribution, in which resolution in the direction perpendicular to the passing direction of a vehicle has been enhanced higher than an interval of the two load cell sensors 2, using detection values of the plural load cell sensors 2 including some load cell sensors 2 disposed with being displaced.

Hence, the resolution of load distribution in the direction perpendicular to a passing direction of a vehicle becomes a high resolution, which has become smaller than the size of the load cell sensor 2, without miniaturizing the load cell sensors 2.

In this embodiment, the load cell sensors 2 are disposed in a plurality of rows using the sensor row 21 as a unit. The load cell sensors 2 are disposed in the sensor row 21 along the direction perpendicular to the reference passing direction DS of a vehicle at equal intervals. The sensor rows 21 are disposed with being mutually displaced in a range smaller than the center interval of the load cell sensors 2 in the direction perpendicular to the reference passing direction DS.

Hence, the operation part 8 can generate a load distribution, of which resolution in the direction perpendicular to the reference passing direction DS has been enhanced by the row number of the sensor rows 21, using detection values from the sensor rows 21.

In this embodiment, the operation part 8 calculates the passing velocity V of a vehicle based on a time difference between singular points in detection waveforms by the load cell sensors 2 disposed with being displaced in the reference passing direction DS; selects detection values, in an input state same as that in the case where a vehicle passes the predetermined operation reference line SL, from the respective detection waveforms by the load cell sensors 2, based on a time difference calculated based on the passing velocity V and a distance between the operation reference line SL and each load cell sensor 2 in the reference passing direction DS; and generates a load distribution on the operation reference line SL based on the combination of the selected detection values by the load cell sensors 2. Hence, load distributions corresponding to various passing velocities V can be obtained.

In this embodiment, the operation part 8 repeats the generation processing of the load distribution on the operation reference line SL with displacing a position of the operation reference line SL in the reference passing direction DS in a predetermined range larger than a grounding surface of a vehicle in order to generate a load distribution of which resolution in the reference passing direction DS corresponds to the operation number of the operation reference lines SL.

Hence, the resolution of load distribution in a passing direction of a vehicle can also be a high resolution, which has become smaller than the size of the load cell sensor 2, without miniaturizing the load cell sensors 2.

Note that, in the above-mentioned embodiment, all of the sensor rows 21 are disposed with being mutually displaced. Otherwise, a part of the sensor rows 21 may be disposed with being displaced from the remaining other sensor rows 21, for example. Furthermore, a part of the load cell sensors 2 in one sensor row 21 may be disposed with being displaced so as to reside between the load cell sensors 2 in another sensor row 21.

Furthermore, in the above-mentioned embodiment, the load cell sensors 2 are disposed mutually adjacent at equal intervals in the row direction and the column direction. Otherwise, the load cell sensors 2 may be disposed with being separated from each other in at least one of the row direction and the column direction, for example. Furthermore, the load cell sensors 2 may not be disposed at equal intervals.

Second Embodiment

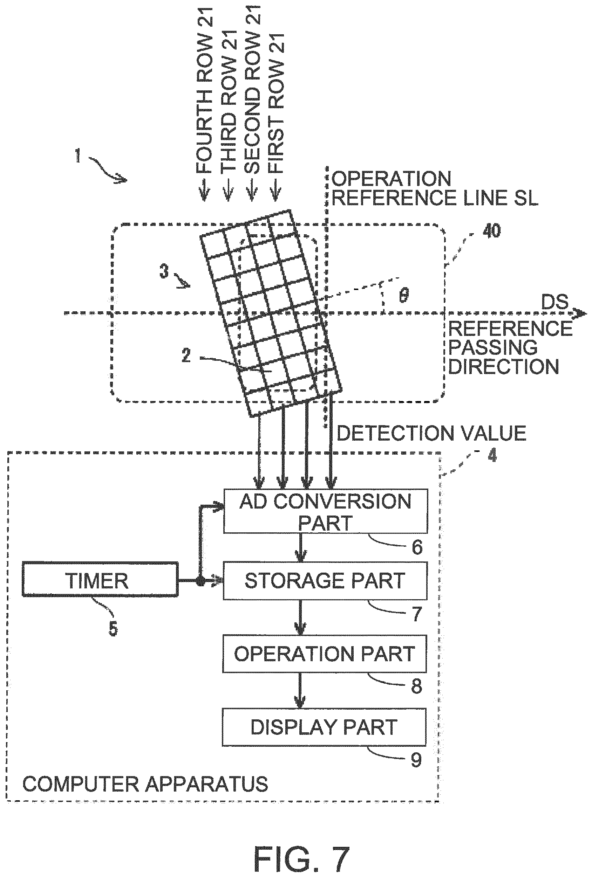

FIG. 7 shows a configuration of the load distribution measuring device 1 for vehicles according to the second embodiment of the present invention.

In the following description, differences from the first embodiment will be mainly described.

In FIG. 7, the load cell sensors 2 are disposed in a matrix form so that a plurality of the load cell sensors 2 are arrayed at equal intervals in each of the row direction and the column direction.

Furthermore, the matrix-like load cell array 3 is disposed obliquely against the reference passing direction DS of a vehicle.

Specifically, the column direction of the matrix intersects with the reference passing direction DS of a vehicle at the following angle θ. Note that, in Expression (6), N is the number of rows in a matrix-like array and arctan() is the arctangent function.

Then, θ becomes about 26.6° when the number of the sensor rows 21 in the matrix is two, for example. Meanwhile, θ becomes about 11.5° in the case of five rows.

$$\theta = \arctan(1/N) \qquad ...\text{Expression (6)}$$

Even in such an arrangement, the load cell sensors 2 are positioned with being mutually displaced in the direction perpendicular to the reference passing direction DS, similarly to the case in the first embodiment.

Hence, a distribution of which resolution has been enhanced by the number of the load cell sensors 2 (the number of rows) in the direction perpendicular to the reference passing direction DS can be generated by the generation processing of load distribution on the operation reference line SL.

Note that, since each sensor row 21 is disposed with inclining at angle θ, detection values by the load cell sensors 2 in each sensor row 21 are not treated as data obtained at the same timing. In the case of the above-mentioned 20 columns and five rows, simultaneously obtained detection values are treated as data obtained at times shown in the following Table 1. Here, t0 is an acquisition time of A row and 1 column; L is an array interval of the load cell sensors 2; and V is a passing velocity.

Table 1

|  | A row | ... | E row |
|---|---|---|---|
| 1 column | t0 | ... | t0+4×L×cosθ |
| 2 column | t0-L×sinθ/V | ... | t0-(L×sinθ-4×L×cosθ)÷V |
| 3 column | t0-2×L×sinθ/V | ... | t0-(2×L×sinθ-4×L×cosθ)÷V |
| : | : | ... | : |
| 20 column | t0-19×L×sinθ/V | ... | t0-(19×L×sinθ-4×L×cosθ)÷V |

Furthermore, in FIG. 7, the load cell sensors 2 themselves incline to the reference passing direction DS. In this case, a detection value in the X-axis direction and a detection value in the Y-axis direction of the load cell sensor 2 in FIGS. 2A, 2B cannot be used as detection values of each load cell sensor 2 as they are.

In this case, what is necessary is to use a value calculated by the following Expression (7) as a detection value in the X-axis direction of the load cell sensor 2 and a value calculated by the following Expression (8) as a detection value in the Y-axis direction of the load cell sensor 2, for example.

$$F(X) = fx \times \cos\theta - fy \times \sin\theta \qquad ...\text{Expression (7)}$$

$$F(Y) = fx \times \sin\theta + fy \times \cos\theta \qquad ...\text{Expression (8)}$$

As described above, in this embodiment, the load cell sensors 2 are disposed in a matrix form so that a plurality of the load cell sensors 2 are arrayed at equal intervals in each of the row direction and the column direction. Furthermore, the load cell sensors 2 are disposed obliquely against the reference passing direction DS of a vehicle so that the column direction of the matrix intersects with the reference passing direction DS. Hence, the operation part 8 can generate a load distribution, of which resolution in the direction perpendicular to the reference passing direction DS has been enhanced by the number of rows of the matrix, as a load distribution expressed by the reference passing direction DS and the direction perpendicular to the reference passing direction DS, using detection values from the sensor rows 21.

In particular, in this embodiment, when the number of the rows in the matrix-like array is N, an angle $\theta$ at which the column direction of the matrix intersects with the reference passing direction DS of a vehicle satisfies the above-mentioned Expression (6). Hence, the resolution of load distribution in the direction perpendicular to the reference passing direction DS is enhanced by the number of the rows of the matrix as a whole.

In the above-mentioned embodiment, the angle $\theta$ formed between the column direction of the matrix and the reference passing direction DS is an angle derived by the above-mentioned Expression (6). Otherwise, an angle formed between the column direction of the matrix and the reference passing direction DS may also be an angle other than the angle derived by the above-mentioned Expression (6), for example. In order to make displacement amounts among sensor columns be mutually equal, it is desirable to set the angle $\theta$ to the angle derived by the above-mentioned Expression (6).

Third Embodiment

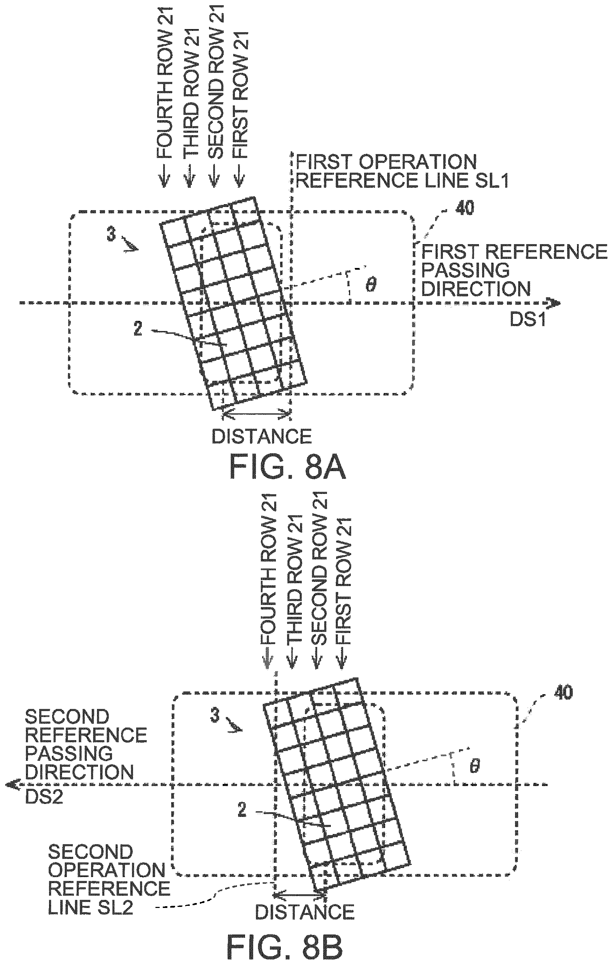

FIGS. 8A and 8B illustrate correspondence relationship between the load cell array 3 and a passing direction of a vehicle.

FIG. 8A illustrates a case where a vehicle passes along the first reference passing direction DS1, from the fourth sensor row 21 side toward the first sensor row 21.

In this case, the detection values from the fourth sensor row 21 to the first sensor row 21 basically become similar to those shown in FIGS. 5A to 5D. Specifically, the load cell sensors 2 in the third sensor row 21 output the detection values after the load cell sensors 2 in the fourth sensor row 21 output the detection values, the load cell sensors 2 in the second sensor row 21 output the detection values after the load cell sensors 2 in the third sensor row 21 output the detection values, and the load cell sensors 2 in the first sensor row 21 output the detection values after the load cell sensors 2 in the second sensor row 21 output the detection values.

FIG. 8B illustrates a case where a vehicle passes along the second reference passing direction DS2, which is opposite to the first reference passing direction DS1, from the first sensor row 21 side toward the fourth sensor row 21.

In this case, the detection values from the fourth sensor row 21 to the first sensor row 21 basically become opposite to those shown in FIGS. 5A to 5D. Specifically, the load cell sensors 2 in the second sensor row 21 output the detection values after the load cell sensors 2 in the first sensor row 21 output the detection values, the load cell sensors 2 in the third sensor row 21 output the detection values after the load cell sensors 2 in the second sensor row 21 output the detection values, and the load cell sensors 2 in the fourth sensor row 21 output the detection values after the load cell sensors 2 in the third sensor row 21 output the detection values.

As described above, when a passing direction of a vehicle passing over the load cell array 3 changes, antero-oposterior relationship of the detection waveforms from the sensor rows 21 are reversed. As a result, it is also necessary to change operation processing based on the detection waveforms from the sensor rows 21.

In this embodiment, processing corresponding to a passing direction of a vehicle over the load cell array 3 will be described.

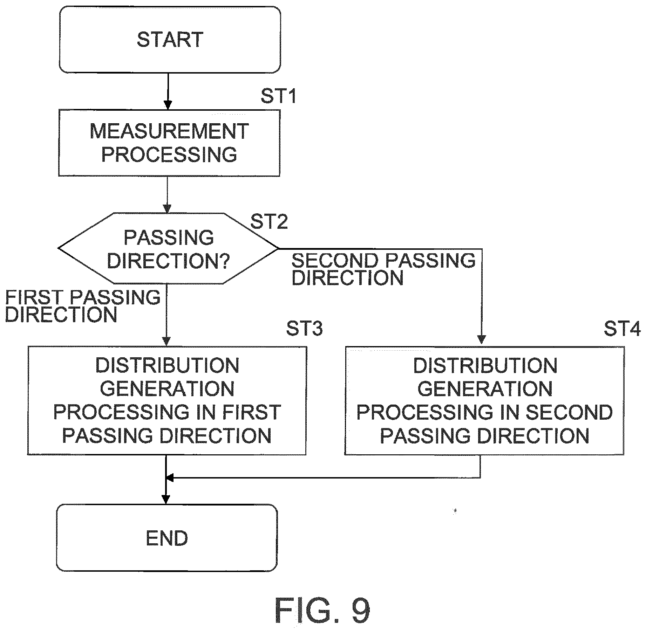

FIG. 9 is a flow chart of passing direction determination processing of the load distribution measuring device 1 for vehicles according to the third embodiment of the present invention.

Hereinafter, differences from the second embodiment will be mainly described.

The load distribution measuring device 1 in the third embodiment performs processing accommodating to both of passing in the first reference passing direction DS1 and passing in the second reference passing direction DS2.

In measurement processing in step ST1, the A/D conversion part 6 outputs detection values by the load cell sensors 2 over a sampling period. The storage part 7 stores these detection values by the load cell sensors 2 with relating the detection values to sampling times measured by the timer 5.

When the sampling data are accumulated in the storage part 7, the operation part 8 determines a passing direction of a vehicle over the load cell array 3 (step ST2).

For example, the operation part 8 obtains a sampling time of a singular point P in a detection waveform corresponding to the fourth sensor row 21 and a sampling time of a singular point P in a detection waveform corresponding to the first sensor row 21, from the storage part 7. Then, the operation part 8 determines that a vehicle has passed from the sensor row 21 side corresponding to the earlier sampling time.

Specifically, when the sampling time at the fourth sensor row 21 is earlier, it is determined that a vehicle has passed in the first reference passing direction DS1. Meanwhile, when the sampling time at the first sensor row 21 is earlier, it is determined that a vehicle has passed in the second reference passing direction DS2.

When it is determined that a vehicle has passed in the first reference passing direction DS1, the operation part 8 performs distribution generation processing in the first reference passing direction DS1 (step ST3).

In this case, the operation part 8 generates a load distribution by operation processing similar to that in the second embodiment or the first embodiment, for example, using the first operation reference line SL1 set to the load cell sensors 2 in the first sensor row 21 as shown in FIG. 8A since a vehicle has passed from the fourth sensor row 21 side toward the first sensor row 21.

When it is determined that a vehicle has passed in the second reference passing direction DS2, the operation part 8 performs distribution generation processing in the second reference passing direction DS2 (step ST4).

In this case, the operation part 8 generates a load distribution by operation processing in which the first sensor row 21 to the fourth sensor row 21 have been reversed, for example, with changing the first operation reference line SL1 to the second operation reference line SL2 set to the load cell sensors 2 in the fourth sensor row 21 as shown in FIG. 8B since a vehicle has passed from the first sensor row 21 side toward the fourth sensor row 21.

That is, the load distribution is generated by the operation processing in which the detection waveform shown in FIG. 5A is replaced with that from the first sensor row 21, the detection waveform shown in FIG. 5B is replaced with that from the second sensor row 21, the detection waveform shown in FIG. 5C is replaced with that from the third sensor row 21, and the detection waveform shown in FIG. 5D is replaced with that from the fourth sensor row 21.

As described above, the operation part 8 in this embodiment switches the operation reference line SL depending on a direction where a vehicle passes the load cell array 3 in which the load cell sensors 2 have been placed. Specifically, the operation reference line SL is switched between when a vehicle passes the load cell array 3 in the first reference passing direction DS1 and when a vehicle passes the load cell array 3 in the second reference passing direction DS2 which is opposite to the first reference passing direction DS1. Hence, a load distribution can be obtained with a high resolution regardless of a passing direction of a vehicle over the load cell array 3.

Note that, in the above-mentioned embodiment, whether the operation reference line SL is the first reference passing direction DS1 or the second reference passing direction DS2 is determined as a direction in which a vehicle passes the load cell array 3. The directions to be determined are not limited to two directions, and may also be not less than three directions, or even numbers not less than four directions. Even in such cases, the operation part 8 can change the operation reference line SL depending on a direction in which a vehicle passes the load cell array 3.

Fourth Embodiment

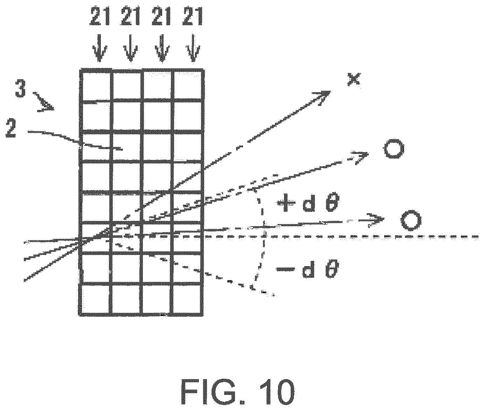

FIG. 10 illustrates correspondence relationship between the matrix-like load cell array 3 and a passing direction of a vehicle.

When a vehicle passes at an angle exceeding an angle range of plus or minus dθ from the column direction as shown in FIG. 10, the array order of the load cell sensors 2 on the operation reference line SL in FIG. 7 is replaced. Thus, a range of angular difference, which can be correctly calculated, between a passing reference direction and an actual passing direction of a vehicle is limited in the operation processing using the operation reference line SL.

In this embodiment, processing in consideration of such an allowable angular error due to arrangement of the load cell array 3 will be described.

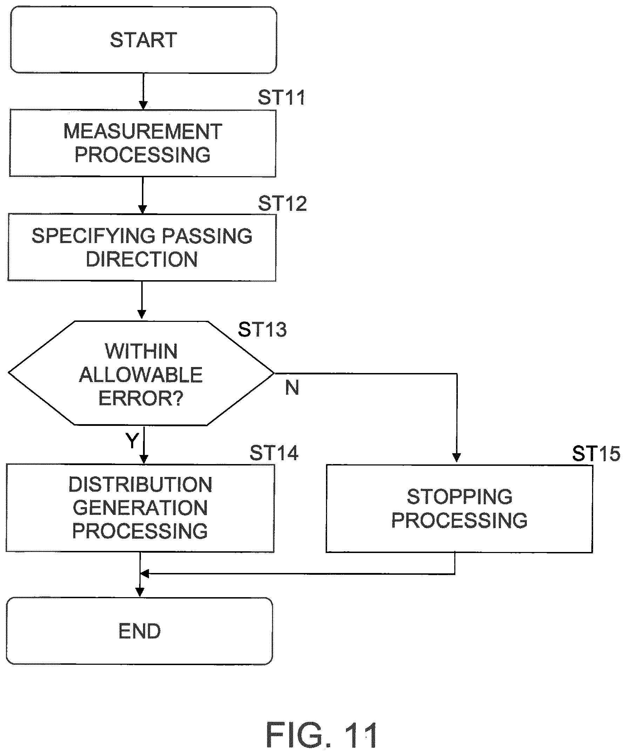

FIG. 11 is a flow chart of passing direction determination processing of the load distribution measuring device 1 for vehicles according to the fourth embodiment of the present invention.

Hereinafter, differences from the second embodiment will be mainly described.

The load distribution measuring device 1 in the fourth embodiment performs load distribution processing with determining an angular difference between a passing reference direction and an actual passing direction of a vehicle.

In the measurement processing in step ST11, the A/D conversion part 6 outputs detection values by the load cell sensors 2 over a sampling period. The storage part 7 stores these detection values by the load cell sensors 2 with relating the detection values to sampling times measured by the timer 5.

When the sampling data are accumulated in the storage part 7, the operation part 8 specifies a passing direction of a vehicle over the load cell array 3 (step ST12).

The operation part 8 obtains detection values by the load cell sensors 2, for example, at the maximum load timing shown in FIG. 4C, from the storage part 7, and specifies an edge direction along a direction of the tyre 40 by differential processing of a distribution of the detection values. Examples of such edge direction include an inner peripheral edge and an outer peripheral edge of the tyre 40 as shown in FIG. 7.

In addition, the operation part 8 may calculate the passing velocity V of a vehicle consisting of a velocity Vx in the X-axis direction and a velocity Vy in the Y-axis direction and specify a passing direction θmove of a vehicle by the operation with substituting the above-mentioned velocities in the following Expression (9), for example.

$$\theta move = \arctan(Vy \div Vx) \qquad ...\text{Expression (9)}$$

Next, the operation part 8 determines whether the specified edge direction or the specified passing direction of a vehicle is within an allowable error to the reference passing direction DS (step ST13).

For example, it is determined whether the specified edge direction or the specified passing direction of a vehicle is within an allowable angle error which is set based on FIG. 10.

When the specified edge direction is within the allowable angle error, the operation part 8 performs the distribution generation processing (step ST14).

The display part 9 displays the generated load distribution.

By contrast, when the specified edge direction is not within the allowable angle error, the operation part 8 cancels the distribution generation processing (step ST15).

Then, the display part 9 displays an error as error processing.

As described above, in this embodiment, when a vehicle passes the load cell array 3, in which the load cell sensors 2 have been placed, in a direction largely deviated from the reference passing direction DS of a vehicle, the generation processing of load distribution by the operation part 8 is canceled, and an error is output from an output part. Hence, a load distribution having inferior accuracy can be avoided from being generated and output.

Fifth Embodiment

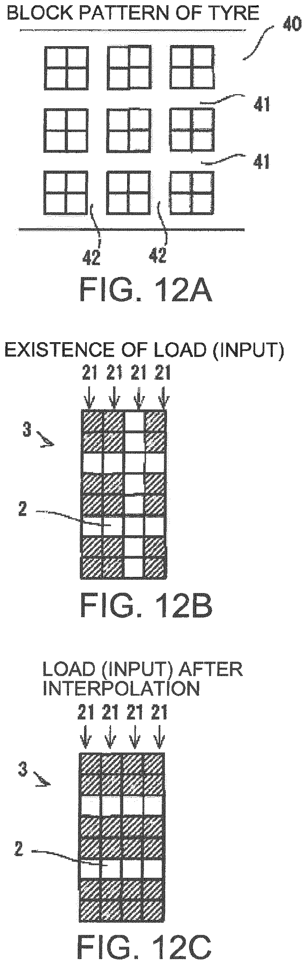

FIGS. 12A to 12C illustrate correspondence relationship between a block pattern of the tyre 40 of a vehicle and interpolation processing.

As shown in FIG. 12A, the tyre 40 of a vehicle has a block pattern including longitudinal grooves 41 and lateral grooves 42 among blocks.

In this case, loads in a state where portions corresponding to the longitudinal grooves 41 and the lateral grooves 42 are missing are input into the load cell sensors 2 as shown in FIG. 12B, for example.

When a load distribution is generated by combining detection values by the load cell sensors 2 in the state where portions of the loads are missing, high-frequency load fluctuation components which do not exist in the block pattern are included in the generated load distribution in the direction perpendicular to the reference passing direction DS. Therefore, a load distribution having inferior accuracy is to be generated.

In this embodiment, processing which suppresses such load fluctuation components will be described.

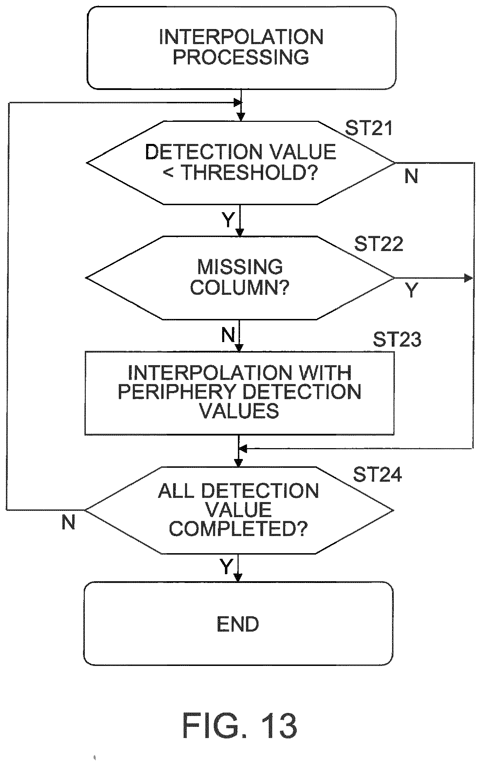

FIG. 13 is a flow chart of interpolation processing of the load distribution measuring device 1 for vehicles according to the fifth embodiment of the present invention.

Hereinafter, differences from the second embodiment will be mainly described.

The load distribution measuring device 1 in the fifth embodiment interpolates the detection values by the load cell sensor 2 so that the detection values correspond to a block pattern of the tyre 40, thereby performing the generation processing of a load distribution in which high-frequency load fluctuation components, which do not exist in the block pattern, have been suppressed.

In the interpolation processing, the operation part 8 firstly obtains a detection value of one load cell sensor 2, and compares the obtained detection value with a predetermined threshold for determining the necessity for the interpolation, as shown in FIG. 13 (step ST21).

The predetermined threshold for determining the necessity of the interpolation may be 0, for example. Preferably, it is desirable to set to a detection value under a small load in a state where a sufficient load input does not act on the whole load cell sensors 2.

Then, when the detection value is larger than the threshold, the operation part 8 ends the interpolation processing regarding the detection value since the interpolation processing is unnecessary.

When the detection value is smaller than the threshold, the operation part 8 determines whether the detection value is caused by a missing column (step ST22).

For example, the operation part 8 obtains a detection value of another load cell sensor 2 or detection values of other load cell sensors 2 aligned, together with the load cell sensor 2 showing the above-mentioned detection value, in the reference passing direction DS or in the column direction along the reference passing direction DS.

Subsequently, the operation part 8 determines whether the detection value of the other load cell sensor 2 or each of the detection values of the other load cell sensors 2 is smaller than the threshold. Then, the operation part 8 determines that the above-mentioned detection value is caused by a missing column when each detection value is lower than the threshold, for example.

A missing column may arise at a sensor column where the longitudinal groove 41 of the tyre 40 has passed, for example. Since the longitudinal groove 41 of the tyre 40 does not apply a load, detection values at each sensor column over which the longitudinal groove 41 has passed become low on the whole. Since detection values at the respective sensor columns continuously align also in the load distribution, it is hard to cause an unnecessary high-frequency disarray component. Hence, the necessity of the interpolation is low.

Therefore, when a detection value corresponds to a missing column, the operation part 8 ends the interpolation processing regarding the detection value since the interpolation processing is unnecessary.

When it is determined that it is not a missing column, the operation part 8 performs the interpolation processing of a detection value targeted for the determination (step ST23).

For example, the operation part 8 interpolates the detection value based on significant detection values or an average value of the significant detection values by other load cell sensors 2 around the load cell sensor 2 (in the column direction) targeted for the determination. The operation part 8 stores an interpolation value in the storage part 7 instead of the original detection value.

After the interpolation processing of one detection value, the operation part 8 determines whether the interpolation processing of all detection values has been completed (step ST24).

When the interpolation processing has not been completed, the operation part 8 obtains the next detection value, and repeatedly performs the interpolation processing from step ST21.

When the interpolation processing of all detection values has been completed, the operation part 8 ends the processing shown in FIG. 13.

Thereby, the operation part 8 interpolates detection values only for the lateral grooves 42 of the tyre 40, as shown in FIG. 12C.

As described above, in this embodiment, the interpolation part interpolates a detection value of each load cell sensors 2, a detection waveform based on the detection values or a load distribution based on the detection values, according to a block pattern of the tyre 40 of a vehicle. In particular, when one load cell sensor 2 detects a small detection value in a state where a sufficient input does not act and when another load cell sensor 2 aligned with the one load cell sensor 2 in the reference passing direction DS or in a direction along the reference passing direction DS also does not output a detection value as a response to a sufficient input, the interpolation is not performed.

Meanwhile, when another load cell sensor 2 outputs a detection value as a response to a sufficient input, the interpolation is performed using the detection value by the other load cell sensor 2. Hence, influence by a block pattern of the tyre 40 is suppressed in the load distribution. In particular, a load distribution presenting grooves formed along the outer peripheral direction of the tyre 40 is obtained. As a result, an intelligible load distribution can be obtained at a high resolution.

In the above-mentioned embodiment, the operation part 8 performs the interpolation processing of a detection value of each load cell sensor 2 or a detection waveform consisting of the detection values, according to a block pattern of the tyre 40, before generating a load distribution. Otherwise, the operation part 8 may perform interpolation processing corresponding to a block pattern of the tyre 40 in the generation processing of load distribution, for example.

Furthermore, in the above-mentioned embodiment, the operation part 8 determines features of a block pattern of the tyre 40 in the interpolation processing in order to perform the interpolation processing depending on the features. Otherwise, the operation part 8 may perform the interpolation processing based on a block pattern of the tyre 40 which has been previously recorded, for example.

List of Reference Signs

| | |
|---|---|
| 1 | load distribution measuring device |
| 2 | load cell sensors |
| 3 | load cell array |
| 4 | computer apparatus |
| 5 | timer |
| 6 | A/D conversion part |
| 7 | storage part |
| 8 | operation part |
| 9 | display part |
| 11 | bar-shaped member |
| 12 | strain sensor |
| 21 | sensor row |
| 31 | load peak |
| 40 | tyre |
| 41 | longitudinal grooves |
| 42 | lateral grooves |

D1   detection waveform
D2   detection waveform
D3   detection waveform
DS   reference passing direction
S    road surface
SL   operation reference line

**Claims**

1. A load distribution measuring device (1) for vehicles comprising:

   - load cell sensors (2) that detect an input from a vehicle passing, the load cell sensors (2) being disposed side by side on a road surface (S) on which a vehicle runs;
   - an operation part (8) that is adapted to generate an actual load distribution from a tyre (40) of a vehicle, the actual load distribution being input into the load cell sensors (2) when a vehicle passed over the load cell sensors (2), the actual load distribution being generated based on detection values from the load cell sensors (2); and
   - an output part that outputs the actual load distribution generated by the operation part (8),
   the load cell sensors (2) are arrayed in sensor rows (21) to have an offset, each of the sensor rows (21) has a plurality of the load cell sensors (2,) which have been disposed adjacent at equal intervals along a direction perpendicular to a reference passing direction (DS) of a vehicle, each sensor row of the sensor rows (21) being offset, the load cell sensors (2) thereby disposed in the column direction along the reference passing direction DS being arrayed with being displaced by an equal amount of offset in the direction perpendicular to the reference passing direction (DS)
   **characterized in that**
   the operation part (8) is adapted to generate the actual load distribution based on the detection values from the load cell sensors (2), a resolution of the actual load distribution in the direction perpendicular to the passing direction of a vehicle has been enhanced higher than a resolution corresponding to an interval of two load cell sensors (2); and
   **in that** the operation part (8) is adapted to:
   calculate a passing velocity of a vehicle based on a time difference between singular points in detection waveforms of the load cell sensors (2) disposed with a positional displacement in a reference passing direction (DS) of a vehicle;
   - select detection values in a same input state as an input state in a case where a vehicle passes a operation reference line, the detection values being selected from the detection waveforms from the load cell sensors (2), respectively, based on a time difference calculated based on the passing velocity and a distance between the operation reference line (SL) and each of the load cell sensors (2) in the reference passing direction (DS);
   - generate a data column of load distribution on the operation reference line (SL), based on a combination of the selected detection values from the load cell sensors (2); and
   - repeat the select and generate steps with displacing a position of the operation reference line (SL) in the direction of the reference passing direction (DS) within a predetermined range larger than the grounding surface of the tyre (40) of a vehicle to generate the actual load distribution.

2. The load distribution measuring device (1) according to claim 1,

   - wherein the operation part (8) is adapted to switch the operation reference line (SL) depending on a direction in which a vehicle passes a range in which the load cell sensors (2) have been placed.

3. The load distribution measuring device (1) according to claim 2,

   - wherein the operation part (8) is adapted to switch the operation reference line (SL) between when a vehicle passes the range in a first passing direction and when a vehicle passes the range in a second passing direction opposite to the first passing direction.

4. The load distribution measuring device (1) according to any one of claims 1 to 2,

   - wherein the operation part (8) is adapted to cancel generation processing of the load distribution and the output part outputs an error when a vehicle has passed in a direction largely deviated from the reference passing direction (DS) of a vehicle.

**5.** The load distribution measuring device (1) according to any one of claims 1 to 4,

- wherein the operation part (8) is adapted to perform an interpolation of the detection values from the load cell sensors (2), the detection waveforms from the load cell sensors (2) or the load distribution so that the detection values, the detection waveforms or the load distribution correspond to a block pattern of the tyre (40) of a vehicle.

**6.** The load distribution measuring device (1) according to claim 5,

- wherein the operation part (8) is adapted not to perform the interpolation when one load cell sensor out of the load cell sensors (2) has detected a small detection value in a state where a sufficient input does not act and when another load cell sensor out of the load cell sensors (2) has not output a detection value by another sufficient input, the other load cell sensor being aligned with the one load cell sensor in the reference passing direction (DS) or in a direction along the reference passing direction (DS)
- while the operation part (8) is adapted to perform the interpolation using the detection value by the other load cell sensor when the one load cell sensor has detected the small detection value and when the other load cell sensor has output the detection value by the sufficient input.

**Patentansprüche**

**1.** Lastverteilungs-Messvorrichtung (1) für Fahrzeuge, die Folgendes aufweist:

- Wägezellsensoren (2), die eine Eingabe von einem vorbeifahrenden Fahrzeug detektieren, wobei die Wägezellsensoren (2) nebeneinander auf einer Straßenoberfläche (S) angeordnet sind, auf der ein Fahrzeug fährt;
- ein Betriebselement (8), das dazu ausgebildet ist, eine momentane Lastverteilung von einem Reifen (40) eines Fahrzeugs zu erzeugen, wobei die momentane Lastverteilung in die Wägezellsensoren (2) eingegeben wird, wenn ein Fahrzeug über die Kraftzellensensoren (2) gefahren ist, wobei die momentane Lastverteilung auf der Grundlage von Detektionswerten von den Wägezellsensoren (2) erzeugt wird; und
- ein Ausgabeelement, das die vom Operationsteil erzeugte momentane Lastverteilung ausgibt (8), wobei die Wägezellsensoren (2) in Sensorzeilen (21) angeordnet sind, derart, dass sie einen Versatz aufzuweisen, wobei jede der Sensorzeilen (21) eine Vielzahl von Wägezellsensoren (2) aufweist, die in gleichen Abständen entlang einer Richtung senkrecht zu einer Referenzfahrtrichtung (DS) eines Fahrzeugs benachbart angeordnet sind, wobei jede Sensorzeile der Sensorzeilen (21) versetzt ist, so dass die Wägezellsensoren (2) in der Spaltenrichtung entlang der Referenzfahrtrichtung DS so angeordnet sind, dass sie um einen gleichen Betrag des Versatzes in der Richtung senkrecht zur Referenzfahrtrichtung (DS) versetzt sind **dadurch gekennzeichnet,**
**dass** das Betriebselement (8) dazu ausgebildet ist, die momentane Lastverteilung auf der Grundlage der Detektionswerte von den Wägezellsensoren (2) zu erzeugen, wobei die Auflösung der momentanen Lastverteilung in der Richtung senkrecht zur Fahrtrichtung eines Fahrzeugs höher ausgelegt ist als die Auflösung, die einem Intervall von zwei Wägezellsensoren (2) entspricht; und dass das Betriebselement (8) für Folgendes ausgebildet ist:

- eine Passiergeschwindigkeit eines Fahrzeugs auf der Grundlage eines Zeitunterschieds zwischen einzelnen Punkten in Detektionswellenformen der Wägezellsensoren (2) zu berechnen, die mit einer Positionsverschiebung in der Referenzfahrtrichtung (DS) eines Fahrzeugs angeordnet sind;
- Detektionswerte in einem gleichen Eingangszustand wie einem Eingangszustand in einem Fall auszuwählen, in dem ein Fahrzeug eine Betriebsreferenzlinie passiert, wobei die Detektionswerte jeweils aus den Detektionswellenformen von den Wägezellsensoren (2) ausgewählt werden, basierend auf einem Zeitunterschied, der auf der Basis der Durchfahrtgeschwindigkeit und eines Abstands zwischen der Betriebsreferenzlinie (SL) und jedem der Wägezellsensoren (2) in der Referenzfahrtrichtung (DS) berechnet wird;
- eine Datenspalte der Lastverteilung auf der Betriebsreferenzlinie (SL) zu erzeugen, basierend auf einer Kombination der ausgewählten Detektionswerte von den Wägezellsensoren (2); und
- die Auswahl- und Erzeugungsschritte zu wiederholen, mit Verlagerung einer Position der Betriebsreferenzlinie (SL) in Richtung der Referenzfahrtrichtung (DS) innerhalb eines vorbestimmten Bereichs, der größer ist als die Bodenberührungsfläche des Reifens (40) eines Fahrzeugs, um die momentane Lastverteilung zu erzeugen.

2. Lastverteilungs-Messvorrichtung (1) nach Anspruch 1,

- wobei das Betriebselement (8) dazu ausgebildet ist, die Betriebsreferenzlinie (SL) in Abhängigkeit von einer Richtung umzuschalten, in der ein Fahrzeug einen Bereich passiert, in dem die Wägezellsensoren (2) angeordnet worden sind.

3. Lastverteilungs-Messvorrichtung (1) nach Anspruch 2,

- wobei das Betriebselement (8) dazu ausgebildet ist, die Betriebsreferenzlinie (SL) umzuschalten zwischen dem Zeitpunkt, zu dem ein Fahrzeug den Bereich in einer ersten Durchfahrtsrichtung passiert, und dem Zeitpunkt, zu dem ein Fahrzeug den Bereich in einer zweiten Durchfahrtsrichtung entgegengesetzt zur ersten Durchfahrtsrichtung passiert.

4. Lastverteilungs-Messvorrichtung (1) nach einem der Ansprüche 1 bis 2,

- wobei das Operationselement (8) dazu ausgebildet ist, die Erzeugungsverarbeitung der Lastverteilung abzubrechen, und das Ausgabeelement einen Fehler ausgibt, wenn ein Fahrzeug in einer Richtung gefahren ist, die stark von der Referenzfahrtrichtung (DS) eines Fahrzeugs abweicht.

5. Lastverteilungs-Messvorrichtung (1) nach einem der Ansprüche 1 bis 4,

- wobei das Betriebselement (8) dazu ausgebildet ist, eine Interpolation der Detektionswerte von den Wägezellsensoren (2), der Detektionswellenformen von den Wägezellsensoren (2) oder der Lastverteilung durchzuführen, so dass die Detektionswerte, die Detektionswellenformen oder die Lastverteilung einem Blockmuster des Reifens (40) eines Fahrzeugs entsprechen.

6. Lastverteilungs-Messvorrichtung (1) nach Anspruch 5,

- wobei das Betriebselement (8) dazu ausgebildet ist, die Interpolation nicht durchzuführen, wenn ein Wägezellsensor von den Wägezellsensoren (2) einen kleinen Detektionswert in einem Zustand erfasst, in dem eine ausreichende Eingabe nicht wirkt, und wenn ein anderer Wägezellsensor von den Wägezellensensoren (2) keinen Detektionswert durch eine andere ausreichenden Eingabe ausgegeben hat, wobei der andere Wägezellsensor mit dem einen Wägezellsensor in der Referenzfahrtrichtung (DS) oder in einer Richtung entlang der Referenzfahrtrichtung (DS) ausgerichtet ist
- während das B etriebselement (8) dazu ausgebildet ist, die Interpolation unter Verwendung des Detektionswertes durch den anderen Wägezellsensor durchzuführen, wenn der eine Wägezellsensor den kleinen Detektionswert erfasst hat und wenn der andere Wägezellensensor den Detektionswert durch die ausreichende Eingabe ausgegeben hat.

**Revendications**

1. Dispositif de mesure de distribution de charge (1) pour véhicules comprenant :

- des capteurs à cellule de charge (2) qui détectent une entrée depuis un véhicule en train de passer, les capteurs à cellule de charge (2) étant disposés côte à côte sur une surface routière (S) sur laquelle un véhicule circule ;
- une partie opérationnelle (8) qui est adaptée pour générer une distribution de charge réelle depuis un pneumatique (40) d'un véhicule, la distribution de charge réelle étant entrée jusque dans les capteurs à cellule de charge (2) quand un véhicule est passé sur les capteurs à cellule de charge (2), la distribution de charge réelle étant générée sur la base de valeurs de détection provenant des capteurs à cellule de charge (2) ; et
- une partie de sortie qui sort la distribution de charge réelle générée par la partie opérationnelle (8),
les capteurs à cellule de charge (2) sont agencés en rangée dans des rangées de capteurs (21) de manière à présenter un décalage, chacune des rangées de capteurs (21) a une pluralité de capteurs à cellule de charge (2) qui ont été disposés de manière adjacente à intervalles égaux le long d'une direction perpendiculaire à une direction de passage de référence (DS) d'un véhicule, chaque rangée de capteurs parmi les rangées de capteurs (21) étant décalée, les capteurs à cellule de charge (2), ainsi disposés dans la direction en colonne le long de la direction de passage de référence (DS), étant agencés en rangée en étant déplacés à raison d'une quantité égale de décalage dans la direction perpendiculaire à la direction de passage de référence (DS),

**caractérisé en ce que**
la partie opérationnelle (8) est adaptée pour générer la distribution de charge réelle sur la base des valeurs de détection provenant des capteurs à cellule de charge (2), une résolution de la distribution de charge réelle dans la direction perpendiculaire à la direction de passage d'un véhicule ayant été augmentée pour être supérieure à une résolution correspondant à un intervalle de deux capteurs à cellule de charge (2) ; et

**en ce que** la partie opérationnelle (8) est adaptée pour :

- calculer une vitesse de passage d'un véhicule sur la base d'une différence temporelle entre des points singuliers dans des formes d'onde de détection des capteurs à cellule de charge (2) disposés avec un déplacement de position dans une direction de passage de référence (DS) d'un véhicule ;
- sélectionner des valeurs de détection dans un même état d'entrée que dans un état d'entrée dans un cas où un véhicule passe une ligne de référence de fonctionnement, les valeurs de détection étant sélectionnées à partir des formes d'onde de détection provenant des capteurs à cellule de charge (2), respectivement, sur la base d'une différence temporelle calculée sur la base de la vitesse de passage et d'une distance entre la ligne de référence de fonctionnement (SL) et chacun des capteurs à cellule de charge (2) dans la direction de passage de référence (DS) ;
- générer une colonne de données de distribution de charge sur la ligne de référence de fonctionnement (SL), sur la base d'une combinaison des valeurs de détection sélectionnées provenant des capteurs à cellule de charge (2) ; et
- répéter les étapes de sélection et de génération avec un déplacement d'une position de la ligne de référence de fonctionnement (SL) dans la direction de la direction de passage de référence (DS) à l'intérieur d'une plage prédéterminée plus grande que la surface de contact au sol du pneumatique (40) d'un véhicule pour générer la distribution de charge réelle.

2. Dispositif de mesure de distribution de charge (1) selon la revendication 1,

- dans lequel la partie opérationnelle (8) est adaptée pour commuter la ligne de référence de fonctionnement (SL) en dépendance d'une direction dans laquelle un véhicule passe une plage dans laquelle les capteurs à cellule de charge (2) ont été placés.

3. Dispositif de mesure de distribution de charge (1) selon la revendication 2,

- dans lequel la partie opérationnelle (8) est adaptée pour commuter la ligne de référence de fonctionnement (SL) entre le moment où un véhicule passe la plage dans une première direction de passage et le moment où un véhicule passe la plage dans une seconde direction de passage opposée à la première direction de passage.

4. Dispositif de mesure de distribution de charge (1) selon l'une quelconque des revendications 1 à 2,

- dans lequel la partie opérationnelle (8) est adaptée pour annuler une génération d'un traitement de la distribution de charge et la partie de sortie sort une erreur quand un véhicule est passé dans une direction largement déviée par rapport à la direction de passage de référence (DS) d'un véhicule.

5. Dispositif de mesure de distribution de charge (1) selon l'une quelconque des revendications 1 à 4,

- dans laquelle la partie opérationnelle (8) est adaptée pour exécuter une interpolation des valeurs de détection provenant des capteurs à cellule de charge (2), des formes d'onde de détection provenant des capteurs à cellule de charge (2) ou de la distribution de charge de sorte que les valeurs de détection, les formes d'onde de détection et la distribution de charge correspondent à un motif de bloc du pneumatique (40) d'un véhicule.

**6.** Dispositif de mesure de distribution de charge (1) selon la revendication 5,

- dans lequel la partie opérationnelle (8) est adaptée pour ne pas exécuter l'interpolation quand un capteur à cellule de charge parmi les capteurs à cellule de charge (2) a détecté une petite valeur de détection dans un état où une entrée suffisante n'agit pas et quand un autre capteur de cellule de charge parmi les capteurs à cellule de charge (2) n'a pas sorti de valeur de détection par une autre entrée suffisante, l'autre capteur à cellule de charge étant aligné avec ledit un capteur à cellule de charge dans la direction de passage de référence (DS) ou dans une direction le long de la direction de passage de référence (DS)

- tandis que la partie opérationnelle (8) est adaptée pour exécuter l'interpolation en utilisant la valeur de détection par l'autre capteur à cellule de charge quand ledit un capteur à cellule de charge a détecté la petite valeur de détection et quand l'autre capteur à cellule de charge a sorti la valeur de détection par l'entrée suffisante.

EP 3 301 424 B1

DETECTION VALUE

AD CONVERSION PART — 6

TIMER — 5

STORAGE PART — 7

OPERATION PART — 8

DISPLAY PART — 9

COMPUTER APPARATUS

FIG. 1

19

FIG. 2A

FIG. 2B

FOURTH ROW 21

THIRD ROW 21

SECOND ROW 21

FIRST ROW 21

3

2

CENTER INTERVAL = L

DS

REFERENCE PASSING
DIRECTION

OPERATION
REFERENCE LINE SL

DISTANCE

FIG. 3A

FIG. 3B

FIG. 4A

FIG. 4B

FIG. 4C

FIG. 4D

FIG. 4E

SAMPLING PERIOD

SAMPLING PERIOD

FOURTH ROW

FIG. 5A

DETECTION
WAVEFORM

TIME
DIFFERENCE

LOAD(INPUT)

SINGULAR
POINT

TIME

THIRD ROW

FIG. 5B

TIME
DIFFERENCE

LOAD(INPUT)

TIME

SECOND ROW

FIG. 5C

TIME
DIFFERENCE

LOAD(INPUT)

TIME

FIRST ROW

FIG. 5D

PASSING
VELOCITY

LOAD(INPUT)

SINGULAR
POINT

T0    T1

TIME

23

GROUNDING LOAD DISTRIBUTION
(LOW RESOLUTION)

FIG. 6A

GROUNDING LOAD DISTRIBUTION
(HIGH RESOLUTION)

FIG. 6B

FIG. 7

FIG. 8A

FIG. 8B

START

ST1

MEASUREMENT
PROCESSING

ST2

PASSING
DIRECTION?

SECOND PASSING
DIRECTION

FIRST PASSING
DIRECTION

ST3

DISTRIBUTION
GENERATION
PROCESSING IN FIRST
PASSING DIRECTION

ST4

DISTRIBUTION
GENERATION
PROCESSING IN SECOND
PASSING DIRECTION

END

FIG. 9

FIG. 10

FIG. 11

BLOCK PATTERN OF TYRE

## FIG. 12A

EXISTENCE OF LOAD (INPUT)

## FIG. 12B

LOAD (INPUT) AFTER
INTERPOLATION

## FIG. 12C

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006226778 A
- JP 2009085621 A
- JP 2010078416 A
- US 2010292953 A
- US 5641900 A
- US 20060123897 A1